# EUROPEAN PATENT SPECIFICATION

(11) **EP 0 776 551 B1**
(45) Date of publication and mention of the grant of the patent: **06.08.2003**
(21) Application number: 95929281.4
(22) Date of filing: 12.07.1995
(51) Int. Cl.: H04B 7/26

(54) **METHOD IN RADIO BASED TELECOMMUNICATION SYSTEM USING REPEATERS**
VERFAHREN FÜR FUNKTELEKOMMUNIKATIONSSYSTEM MIT VERSTÄRKER
PROCEDE POUR SYSTEME DE RADIOTELECOMMUNICATION A REPETEURS

(30) Priority: 19.08.1994 SE 9402769
(43) Date of publication of application: 04.06.1997
(73) Proprietor: TELIA AB, 123 86 Farsta (SE)
(72) Inventor: WICKMAN, Johan, S-237 35 Bjärred (SE)
(74) Representative: Hopfgarten, Nils
(86) International application number: PCT/SE95/00849
(87) International publication number: WO 96/007250

(56) References cited:
- EP-A- 0 497 490
- EP-A- 0 637 144
- WO-A-94/14250
- WO-A-94/17605
- US-A- 5 133 080

## Description

### TECHNICAL FIELD

It will be referred to the introductions in the following patent claim for device and method respectively.

### STATE OF TECHNOLOGY

Repeaters in radio based communication systems can for many applications be of very great importance for the economy and functionality of the system. Example of a powerful repeater application is the radio based local network application OMA (Områdesbegränsad Mobil Access = Area Restricted Mobile Access). The application implies that the terminating wire connection to the subscriber is replaced or completed by surface covering radio. The subscriber is offered terminal mobility within one or more restricted areas. If repeaters are used the numbers of base units can be reduced by a factor of 10-100, resulting in that the costs for among other things the wire connection of base units are dramatically reduced. Repeaters can consequently be of great importance in future systems.

The importance of repeaters has led to that DECT-repeaters are at present being standardized within ETSI RES-3.

### DESCRIPTION OF THE INVENTION

### TECHNICAL PROBLEM

Compared with previous proposals within the field there is a need for refining and further development to meet the demands which have lately arisen in connection with an ever increasing concentration on repeaters.

In the international patent application "Arrangement for a short-range radio system" W094/14250 is described a mobile radio system using repeater function. The repeater function is placed between the ordinary base station and the mobile unit and its object is to repeat transmission between the base station and the mobile. The repeating of the information is done in predetermined time gaps within a time frame. The transmission of the repeating function occurs in four parts in one time frame where each part contains four time gaps. However, the number of time gaps per part can be selected differently in order to increase the capacity in critical parts in the mobile communications system. Each part of the time frame has its specific mission to send information; from base station to repeater, from repeater to mobile unit, from mobile unit to repeater, or from repeater to base station.

The invention is based on the knowledge that, for avoiding serious delays, repeating must be performed within one time frame. The invention solves certain technical problems which occur at repeating within one time frame:
- How hand over within or between cells respectively and between cells is made possible.
- How interference between repeaters are avoided in spite of all repeaters having access to all channels.
- How the use of capacity demanding double duplex communication between repeaters and base station are avoided without the need of separating repeating of the control signalling and useful data in different time frames.
- How optimal selection of channels can be performed in spite of the portable not "hearing the base station".
- How one, regarding portables, avoids influencing present DECT-specification.

### THE SOLUTION

See characterizing parts of the subsequent patent claims.

### ADVANTAGES

By the invention system technical advantages can be achieved by repeater function. Hand over will be possible between cells and repeaters. The system can be used in radio system which use TDMA/TDD/MC. Appropriate fields of application are radio based local networks, system for wireless Privat Automatic Branch Exchanges (PABX), and public access. In connection with the above mentioned may in the short run the CT-system DCT900 and DECT be used. Notice that it may be quite possible to use one and the same DCT900 or DECT-portable (PP) in all above mentioned applications.

Repeating is made within one time frame. One-way average delay which is added is therefore < 2.5 ms. One does not need to use two dupex connections between RFP and REP, which results in less capacity demanding systems. CRC-based micro diversity is possible. Macro diversity becomes possible. The invention implies that no separation of repeating of control signalling and useful data is needed, which simplifies encryption. Repeaters have a very big economic and functional potential for above mentioned systems and for coming systems using TDMA. With the invention are important problems solved for repeaters in TDMA-system.

### DESCRIPTION OF FIGURES

The invention will be described below while, at the same time, is referred to enclosed drawings where
figure 1 shows an example of OMA with repeaters,
figure 2 shows method for establishing of duplex channels,
figure 3 shows a flow chart for repeating in uplink, and
figure 4 shows a flow chart for repeating in downlink.

### DETAILED DESCRIPTION

The following abbreviations are used:
- REP: Repeater
- PP: Portable Part
- RFP: Radio Fixed Part (corresponding to base station)
- ARK: Access Rights Key
- ARI: Access Rights Identity

The following invention gives directives how repeating with coding/decoding of control fields can be performed in radio systems with time shared access, as for instance in DECT. PP follows normal access schedule, for DECT does this imply that transmitting and receiving are separated a half time frame. Reception for RFP is, on the contrary, delayed a number of time slots in relation to transmitting for RFP.

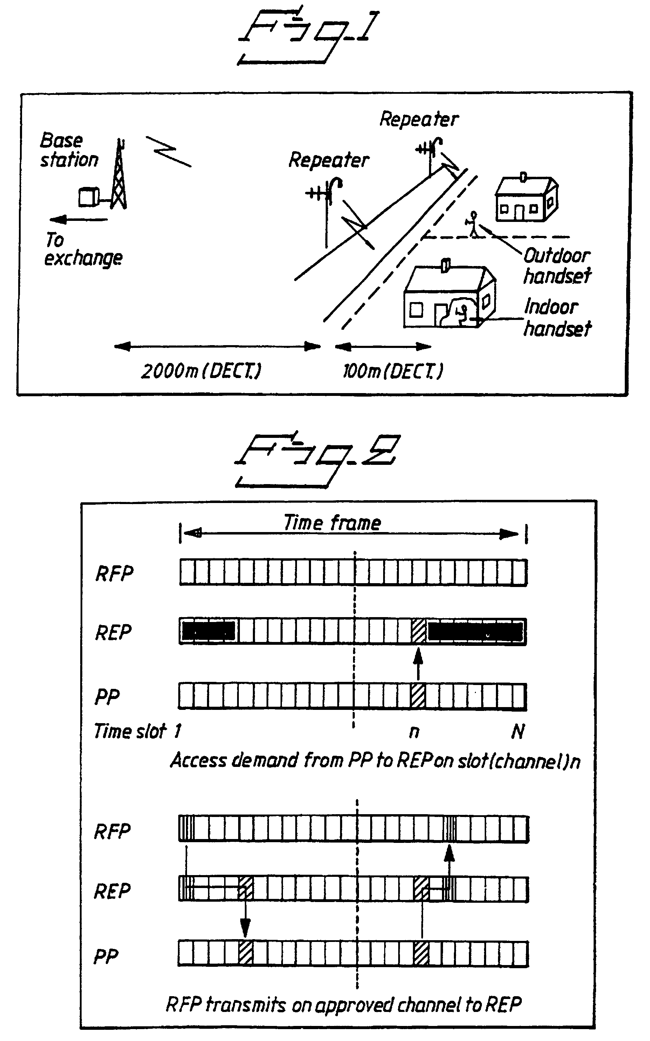

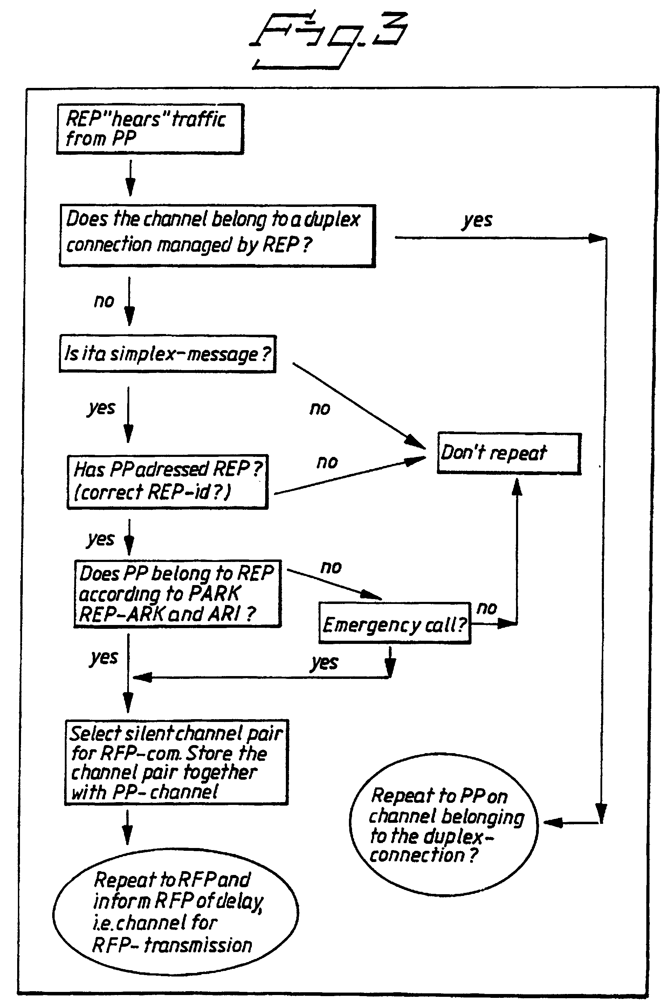

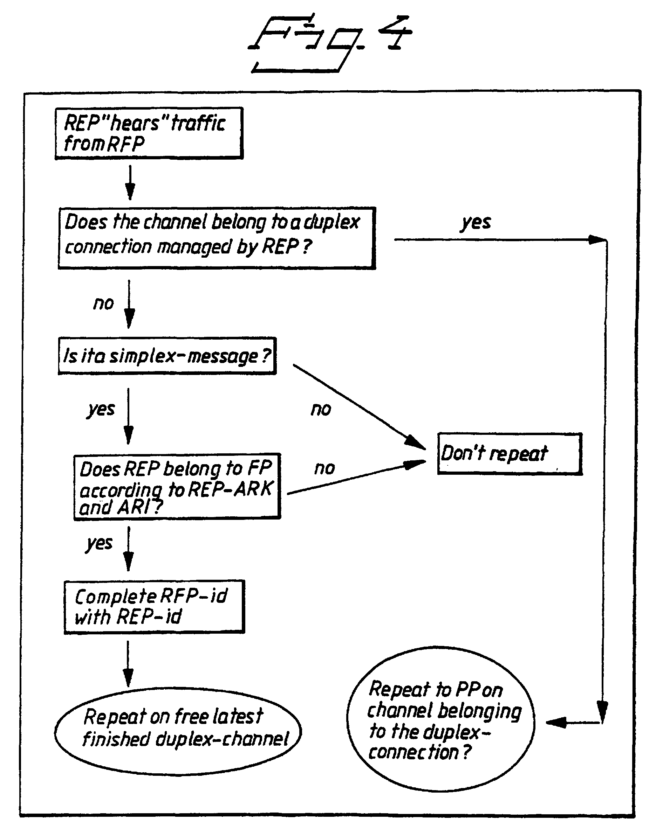

RFP, however, must have knowledge of this delay, i.e. that REP is used. Example:
**A. Set up initiated by RFP**
   Set up from RFP is performed by normal paging message. Selection of channel is performed by PP, whereupon demand for access is returned by PP on the selected channel. REP compares the selection of channel with REP channel list. If the channel is not sufficiently silent, there will (see also figure 2 and 3) either be no repteition; instead PP is informed from REP that the selection of channel is not accepted. The message is sent in downlink on by PP wished channel. Or REP selects another, more silent channel for the RFP-communication, such one that repetition in downlink from RFP yet can be performed on channel wished by PP. At accepted, confirmed channel selection repeating is made in uplink. REP adds message to control field regarding present delay, i.e. channel for RFP>REP-communication. N.B.; if such message is lacking, RFP shall suppose that the delay is zero slots. i.e. communication is performed without REP, direct with PP.
**B. Set up initiated by PP**
   Set up from PP is performed by access demand on wished channel

How to avoid two REP uplink repeating the same message ?
PP indicates wished RFP-identity (corresponding to FMID), geographically unique). But this RFP-id also comprise a local REP-unique addition. This addition has been added in downlink by respective REP.
Possibly REP can remove the ID-addition in uplink in order not to distract RFP (see fig.3)

How to avoid two REP downlink repeating the same message on the same channel ?
The problemn does not exist for established duplex communication because REP knows which duplex channels it is managing. For simplex messages from one and the same RFP, adjacent RFP should, on the contrary, repeat on different channels for avoding interference. The selection of channel can be made in such a way that REP which receives simplex traffic shall repeat on the free channel which latest by REP carried a finished duplex. (Channel change can also be performed by REP if PP demands "change dummy bearer position") (see fig.4)

How to manage hand over between two REP (inter REP handover)?
As previously mentioned each REP indicate his local unique identity as an addition to the RFP-identity. This entails that also inter REP handover is managed - PP indicates, as we know, indirectly wished REP-id at each new access demand.

How to manage hand over between REP and RFP?
In the same way as inter REP hand over. PP "sees" that REP and RFP have different identities. This implies that REP will not repeat the new access demand from PP, because REP is not addressed. For RFP occurs a "normal" intra cell hand over, but in addition with a change of delay between transmission/reception.

Two adjacent REP can by using a common identity be used for macro diversity according to previous invention announcing. REP ought to have an access key (REP-ARK) corresponding to Park for PP.

By REP comparing REP-ARK with ARI from RFP, REP can decide whether it has a right to repeat from the RFP in question.

REP -id can also be used by RFP for addressing specific REP for system updating, trouble shooting etc. I may for instance be valuable to have opportunity to change REP-ARK for a REP. IN this way can for instance operator's belonging be changed.

Emergency call shall be repeated independent from REP-ARK.

As further description to figure 2 access demand from PP to REP on slot (channel)n. REP selects slots for communication with RFP. For uplink (REP->RFP) the best slot of n+1 to N is selected. For downlink (RFP->REP) the best slot of 1 to n-1-N/2 is selected, wherein n+1<=N, and n>= 1+N/2. At performed channel selection REP repeats to RFP. In control field RFP is informed of desired channel for downlink rep.
RFP transmits in approved channel to REP, which after that repeats to PP on the channel indicated by PP established duplex communication proceeds.

References are made to the figures which should be self explaining.

## Claims

1. Method in a radio based telecommunication system, preferably DECT, using at least one stationary unit (RFP), at least one portable unit (PP), and at least one repeater (REP) in the communication between said units, wherein at establishing of a duplex channel between said portable unit (PP) and said stationary unit (RFP), uplink communication from the portable unit (PP) to the stationary unit (RFP) and downlink communication from the stationary unit (RFP) to the portable unit (PP) are performed through said repeater (REP), and wherein an access demand is sent from the portable unit (PP) to the repeater (REP) on a time slot n, and the repeater (REP) selects both the best time slot of n+1 to N to communicate in uplink with the stationary unit (RFP) and the best time slot of 1 to n-1-N/2 for the communication in downlink from the stationary unit (RFP) to the repeater (REP), and the repeater (REP) communicates in downlink with the portable unit (PP) on a time slot n-N/2 - where n is the slot which was indicated by said portable unit (PP) at its access demand, or a channel which the repeater (REP) selected at said access demand if the channel initially selected by the portable unit (PP) was not sufficiently silent, N is the number of slots in a certain frame, and n+1≤N and n≥1+N/2 -, and wherein the control field of the stationary unit (RFP) is informed of the desired channel for the downlink repeating, **characterized in that**:
- at the establishing of a simplex channel in downlink communication, the selection of channel is made in such a way that the repeater (REP) which receives simplex traffic repeats the traffic on that free channel which latest by said repeater (REP) carried a finished duplex; and **in that**
- each repeater (REP) indicates its local unique identity as an addition to the identity of the stationary unit (RFP), which entails that interrepeater handover is managed by means of the portable unit (PP) indirectly indicating wished repeater identity at each new access demand.

2. Method according to claim 1, **characterized in that** handover between said repeater (REP) and said stationary unit (RFP) is made possible, **in that** said portable unit (PP) knows that the repeater (REP) and the stationary unit (RFP) have different identities, which implies that said repeater (REP) does not repeat the new access demand from said portable unit (PP) because said repeater (REP) is not addressed.

## Patentansprüche

1. Verfahren in einem auf Funk beruhenden Telekommunikationssystem, vorzugsweise DECT, das wenigstens eine stationäre Einheit (RFP), wenigstens eine tragbare Einheit (PP) und wenigstens einen Repeater (Zwischenverstärker oder Wiederholer REP) bei der Kommunikation zwischen den Einheiten verwendet, wobei bei der Einrichtung eines Duplex-Kanals zwischen der tragbaren Einheit (PP) und der stationären Einheit (RFP) Aufwärtskommunikation von der tragbaren Einheit (PP) zur stationären Einheit (RFP) und Abwärtskommunikation von der stationären Einheit (RFP) zur tragbaren Einheit (PP) durch den Repeater (REP) durchgeführt werden, und wobei eine Zugangsanforderung von der tragbaren Einheit (PP) zum Repeater (REP) auf einem Zeitschlitz n gesendet wird und der Repeater (REP) sowohl den besten Zeitschlitz von n+1 bis N, um in Aufwärtsrichtung mit der stationären Einheit (RFP) zu kommunizieren, und den besten Zeitschlitz von 1 bis n-1-N/2 für die Kommunikation in Abwärtsrichtung von der stationären Einheit (RFP) zum Repeater (REP) auswählt und der Repeater (REP) in Abwärtsrichtung mit der tragbaren Einheit (PP) auf dem Zeitschlitz n-N/2 kommuniziert, wobei n der Schlitz ist, der durch die tragbare Einheit (PP) bei ihrer Zugangsanforderung angezeigt wurde, oder ein Kanal ist, den der Repeater (REP) bei der Zugangsanforderung ausgewählt hat, wenn der anfänglich durch die tragbare Einheit (PP) ausgewählte Kanal nicht ausreichend ruhig war, wobei N die Anzahl der Schlitze in einem gewissen Datenblock ist, und wobei n+1≤N und n≥1+N/2 ist, und wobei das Steuerfeld der stationären Einheit (RFP) über den gewünschten Kanal für die Wiederholung (Zwischenverstärkung) in Abwärtsrichtung informiert wird, **dadurch gekennzeichnet, daß**
- beim Einrichten eines Simplex Kanals in der Abwärtskommunikation die Auswahl des Kanals auf solche Weise getroffen wird, daß der Repeater (REP), der Simplexverkehr empfängt, den Verkehr auf dem freien Kanal wiederholt, der zuletzt durch den Repeater (REP) ein beendetes Duplex abgewickelt hat;
und daß
- jeder Repeater (REP) seine eindeutige lokale Identität als Zusatz zur Identität der stationären Einheit (RFP) anzeigt, was mit sich bringt, daß Übergabe zwischen Repeatern mit Hilfe der tragbaren Einheit (PP) verwaltet wird, die indirekt die gewünschte Repeateridentität bei jeder neuen Zugangsanforderung anzeigt.

2. Verfahren nach Anspruch 1, **dadurch gekennzeichnet, daß** die Übergabe zwischen dem Repeater (REP) und der stationären Einheit (RFP) dadurch ermöglicht wird, daß die tragbare Einheit (PP) weiß, daß der Repeater (RFP) und die stationäre Einheit (RFP) unterschiedliche Identitäten haben, was mit sich bringt, daß der Repeater (REP) nicht die neue Zugangsanforderung von der tragbaren Einheit (PP) wiederholt, da der Repeater (REP) nicht adressiert ist.

## Revendications

1. Procédé pour système de télécommunication à base de radio, de préférence DECT, utilisant au moins une unité statique (RFP), au moins une unité portative (PP) et au moins un répéteur (REP) au niveau de la communication entre lesdites unités, dans lequel lors de l'établissement d'une voie duplex entre ladite unité portative (PP) et ladite unité statique (RFP), une communication ascendante depuis l'unité portative (PP) vers l'unité statique (RFP) et une communication descendante depuis l'unité statique (RFP) vers l'unité portative (PP) sont établies par le biais dudit répéteur (REP) et dans lequel une demande d'accès est envoyée de l'unité portative (PP) vers le répéteur (REP) dans un intervalle de temps n, et le répéteur (REP) sélectionne à la fois le meilleur intervalle de temps de n+1 à N pour communiquer de façon ascendante avec l'unité statique (RFP) et le meilleur intervalle de temps de 1 à n-1-N/2 pour communiquer de façon descendante depuis l'unité statique (RFP) vers le répéteur (REP), et le répéteur (REP) communique de façon descendante avec l'unité portative (PP) sur un intervalle de temps n-N/2 - où n est l'intervalle indiqué par ladite unité portative (PP) lors de sa demande d'accès, ou une voie sélectionnée par le répéteur (REP) lors de ladite demande d'accès si la voie initialement sélectionnée par l'unité portative (PP)n'était pas suffisamment silencieuse, N est le nombre d'intervalles dans une certaine trame, et n+1≤N et n≥1+N/2, et dans lequel le champ de commande de l'unité statique (RFP) est informé de la voie souhaitée pour la répétition descendante, **caractérisé en ce que** :
- lors de l'établissement d'une voie simplex en communication descendante, la sélection de la voie se fait de telle sorte que le répéteur (REP) qui reçoit le trafic simplex répète le trafic sur ladite dernière voie ayant acheminé par ledit répéteur (REP) un duplex fini ; et **en ce que**
- chaque répéteur (REP)indique son identité locale unique en plus de l'identité de l'unité statique (RFP), ce qui entraîne un transfert de répéteur pris en charge par l'unité portative (PP) qui indique de façon indirecte l'identité du répéteur souhaité lors de chaque nouvelle demande d'accès.

2. Procédé selon la revendication 1, **caractérisé en ce que** le transfert entre ledit répéteur (REP) et ladite unité statique (RFP) est rendu possible, **en ce que** ladite unité portative (PP) sait que le répéteur (REP) et l'unité statique (RFP) ont des identités différentes, ce qui implique que ledit répéteur (REP) ne répète pas la nouvelle demande d'accès de (REP) vers ladite unité portative (PP) car ledit répéteur (REP) n'est pas sollicité.
